# EUROPÄISCHE PATENTANMELDUNG

(11) **EP 1 391 768 A1**
(43) Veröffentlichungstag der Anmeldung: **25.02.2004**
(21) Anmeldenummer: 03102008.4
(22) Anmeldetag: 04.07.2003
(51) Int. Cl.: G02B 21/00, G01J 3/36

(54) **Vorrichtung zur spektralen Selektion und Detektion eines Lichtstrahls und Scanmikroskop**

(30) Priorität: 21.08.2002 DE 10238100
(71) Anmelder: Leica Microsystems Heidelberg GmbH, 68165 Mannheim (DE)
(72) Erfinder: Engelhardt, Johann, 76669, Bad Schönborn (DE)
(74) Vertreter: Reichert, Werner F., Dr.

(57) **Zusammenfassung**

Eine Vorrichtung (25) zur Selektion und Detektion mindestens zweier Spektralbereiche eines Lichtstrahls (27) mit einem Mittel (29) zum spektralen Auffächern des Lichtstrahles, mit in ihrer Position veränderbaren Mitteln (39) zum Ausblenden eines ersten Spektralbereichs und zur Reflexion mindestens eines Teils des nicht ausgeblendeten Spektralbereichs und mit einer Detektionseinrichtung (63), die Mittel zur Detektion des ersten und Mittel zur Detektion des reflektierten Spektralbereichs umfasst, ist offenbart. Die Vorrichtung ist dadurch gekennzeichnet, dass Fokussiermittel (33) zum Fokussieren des spektral aufgespaltenen Lichtstrahles zu einer Fokuslinie (35) vorgesehen sind und dass die Detektionseinrichtung in einer zur Fokuslinie senkrechten Ebene (57) angeordnet ist, wobei die Mittel zum Ausblenden eines ersten Spektralbereichs und zur Reflexion mindestens eines Teils des nicht ausgeblendeten Spektralbereichs parallel zur Fokuslinie in ihrer Position veränderbar sind. Außerdem ist ein Scanmikroskop mit einer Vorrichtung zur Selektion und Detektion mindestens zweier Spektralbereiche eines Lichtstrahls offenbart.

## Beschreibung

Die Erfindung betrifft eine Vorrichtung zur Selektion und Detektion mindestens zweier Spektralbereiche eines Lichtstrahls mit einem Mittel zum spektralen Auffächern des Lichtstrahles, mit in ihrer Position veränderbaren Mitteln zum Ausblenden eines ersten Spektralbereichs und zur Reflexion mindestens eines Teils des nicht ausgeblendeten Spektralbereichs und mit einer Detektionseinrichtung, die Mittel zur Detektion des ersten und Mittel zur Detektion des reflektierten Spektralbereichs umfasst.

Außerdem betrifft die Erfindung ein Scanmikroskop mit einer Vorrichtung zur Selektion und Detektion mindestens zweier Spektralbereiche eines Lichtstrahls.

Eine Vorrichtungen zur Selektion und Detektion mindestens zweier Spektralbereiche eines Lichtstrahls ist aus der Deutschen Offenlegungsschrift DE 43 30 347 A1 bekannt. Die Vorrichtung mit einer Selektionseinrichtung und einer Detektionseinrichtung ist zur zuverlässigen gleichzeitigen Selektion und Detektion unterschiedlicher Spektralbereiche bei hoher Ausbeute und bei einfachster Konstruktion derart ausgestaltet, dass die Selektionseinrichtung Mittel zur spektralen Zerlegung des Lichtstrahles und Mittel einerseits zum Ausblenden eines ersten Spektralbereichs und andererseits zur Reflexion zumindest eines Teils des nicht ausgeblendeten Spektralbereichs und die Detektionseinrichtung einen im Strahlengang des ausgeblendeten ersten Spektralbereichs angeordneten ersten Detektor und einen im Strahlengang des reflektierten Spektralbereichs angeordneten zweiten Detektor umfasst.

DE 199 02 625 A1 ist eine Vorrichtung zur gleichzeitigen Detektion mehrerer Spektralbereiche eines Lichtstrahls, insbesondere zur Detektion des Lichtstrahls eines Laserscanners im Detektionsstrahlengang eines Konfokalmikroskops, bekannt. Die Vorrichtung ist zur Realisierung eines einfachen Aufbaus bei geringer Baugröße und unter Vermeidung des Defokusiereffektes gekennzeichnet durch eine Anordnung (3) zum spektralen Auffächern des Lichtstrahls und eine Anordnung zur Aufspaltung des aufgefächerten Strahls aus der Dispersionsebene heraus in Spektralbereiche und anschließenden Detektion der aufgespaltenen Spektralbereiche.

Aus der Deutschen Offenlegungsschrift DE 100 06 800 A1 ist eine Vorrichtung zur Selektion und Detektion mindestens eines Spektralbereichs eines spektral aufgefächerten Lichtstrahls, vorzugsweise im Strahlengang eines konfokalen Rastermikroskops bekannt, wobei der aufgefächerte Lichtstrahl in einer Fokallinie fokussierbar ist, ist zur überlappungsfreien Detektion des spektral aufgefächerten Lichtstrahls der selektierten Spektralbereiche bei einer erhöhten Anzahl von Detektoren und einer fehlertoleranten Anordnung dadurch gekennzeichnet, dass im aufgefächerten Lichtstrahl ein den Lichtstrahl zu einem Detektor reflektierendes und/oder brechendes optisches Bauteil angeordnet ist, dessen optisch wirksamer Bereich sich entlang der Oberfläche verkleinert oder vergrößert, so dass durch Ausrichtung des Bauteils zur Fokallinie und die sich daraus ergebende Überdeckung von Fokallinie und Oberfläche der zum Detektor gelangende Spektralbereich definierbar ist.

In der Scanmikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet. Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt, wobei die Bahn des Abtastlichtstrahles auf bzw. in dem Objekt idealer Weise einen Mäander beschreibt. (Abtasten einer Zeile in x-Richtung bei konstanter y-Position, anschließend x-Abtastung anhalten und per y-Verstellung auf die nächste abzutastende Zeile schwenken und dann, bei konstanter y-Position, diese Zeile in negative x-Richtung abtasten u.s.w.). Um eine schichtweise Bilddatennahme zu ermöglichen, wird der Probentisch oder das Objektiv nach dem Abtasten einer Schicht verschoben und so die nächste abzutastende Schicht in die Fokusebene des Objektivs gebracht.

Die bereits erwähnte Offenlegungsschrift DE 43 30 347 A1 offenbart, dass durch Kaskadierung der Vorrichtung eine Selektion und Detektion auch in mehr als zwei Spektralbereichen möglich ist. Die Vorrichtung, die aus der DE 199 02 625 A1 bekannt ist, gibt eine geschickte Anordnung der Spiegelblenden an, die eine Selektion und Detektion in vier Spektralbereichen ermöglicht. Eine weitere Kaskadierung dieser Vorrichtung ist aufwendig und nur mit Inkaufnahme einer Verschlechterung des spektralen Auflösungsvermögens möglich.

Es ist daher Aufgabe der vorliegenden Erfindung eine Vorrichtung zur Selektion und Detektion mehrerer Spektralbereiche eines Lichtstrahls anzugeben, die bei hoher mechanischer Stabilität und Zuverlässigkeit die Selektion und Detektion einer höheren Anzahl von Spektralbereichen eines Lichtstrahles ermöglicht.

Diese Aufgabe wird durch eine Vorrichtung gelöst, die dadurch gekennzeichnet ist, Fokussiermittel zum Fokussieren des spektral aufgespaltenen Lichtstrahles zu einer Fokuslinie vorgesehen sind und dass die Detektionseinrichtung in einer zu der Geraden, auf der die Fokuslinie liegt, senkrechten Ebene angeordnet ist, wobei die Mittel zum Ausblenden eines ersten Spektralbereichs und zur Reflexion mindestens eines Teils des nicht ausgeblendeten Spektralbereichs parallel zu der Geraden, auf der die Fokuslinie liegt, in ihrer Position veränderbar sind.

Die Erfindung hat den Vorteil, dass bei reduzierter Baugröße die Selektion und Detektion in einer höhern Anzahl von Spektralbereichen bei großer mechanischer Zuverlässigkeit und Stabilität ermöglicht ist.

In einer bevorzugen Ausgestaltung ist die Detektionseinrichtung ringförmig um die Mittel zum Ausblenden eines ersten Spektralbereichs und zur Reflexion mindestens eines Teils des nicht ausgeblendeten Spektralbereichs angeordnet.

Die Mittel zum Ausblenden eines ersten Spektralbereichs und zur Reflexion mindestens eines Teils des nicht ausgeblendeten Spektralbereichs sind vorzugsweise parallel zur Fokuslinie in ihrer Position veränderbar. Vorzugsweise ist hierzu zumindest ein motorischer Antrieb vorgesehen, der beispielsweise als Elektromotor ausgeführt sein kann. In einer besonders bevorzugen Ausgestaltung ist jedem Mittel zum Ausblenden eines ersten Spektralbereichs und zur Reflexion mindestens eines Teils des nicht ausgeblendeten Spektralbereichs ein motorischer Antrieb zugeordnet. Ganz besonders vorteilhaft ist eine Ausgestaltung bei der die motorischen Antriebe in mindestens einer Ebene Angeordnet sind, die parallel zu der zur Fokuslinie senkrechten Ebene ist. Diese Ausgestaltung weist vorzugsweise eine Schichtstruktur auf, bei der die Mittel zum Ausblenden eines ersten Spektralbereichs und zur Reflexion mindestens eines Teils des nicht ausgeblendeten Spektralbereichs, die Mittel zur Detektion und die motorischen Antriebe in verschiednen Schichten angeordnet sind.

In einer Variante verschieben die motorischen Antriebe die Mittel zum Ausblenden eines ersten Spektralbereichs und zur Reflexion mindestens eines Teils des nicht ausgeblendeten Spektralbereichs über Antriebsstangen oder Antriebsrohre, die vorzugsweise gekröpft sind. Die gekröpfte Ausführung ermöglicht eine Anordnung der Mittel zum Ausblenden eines ersten Spektralbereichs und zur Reflexion mindestens eines Teils des nicht ausgeblendeten Spektralbereichs in der Nähe der Fokallinie, ohne dass es bei der Anordnung der zugehörigen motorischen Antriebe zu Platzproblemen kommt. In einer bevorzugen Ausgestaltung dienen die Antriebsstangen oder Antriebsrohre gleichzeitig zur Führung. Es können auch reine Führungselemente vorgesehen sein.

In einer anderen Variante sind Gewindespindeln zur Übertragung der Antriebsenergie vorgesehen.

Vorzugsweise sind die Mittel zum Ausblenden eines ersten Spektralbereichs und zur Reflexion mindestens eines Teils des nicht ausgeblendeten Spektralbereichs derart versetzt angeordnet, dass eine Kollision ausgeschlossen ist. In ein besonderen Ausführung sind die Mittel zum Ausblenden eines ersten Spektralbereichs und zur Reflexion mindestens eines Teils des nicht ausgeblendeten Spektralbereichs Spiegelblenden. Vorzugsweise sind diese als verspiegelte Halbzylinder ausgebildet, die in die Antriebsrohre einfügbar sind.

Die Mittel zum Ausblenden eines ersten Spektralbereichs und zur Reflexion mindestens eines Teils des nicht ausgeblendeten Spektralbereichs sind vorzugsweise im Bereich der Fokuslinie angeordnet, wodurch eine hohe spektrale Auflösung gewährleistet ist.

Ganz besonders effizient ist eine Vorrichtung, die 26 Spiegelblenden 9 Mittel zur Detektion beinhaltet. Vorzugsweise sind die Mittel zur Detektion Photomultiplier.

In einer besonders bevorzugten Ausführung sind die Mittel zur Detektion in einem ringförmigen Chassis angeordnet, das vorzugsweise senkrecht zur Rohrachse angeordnete Trägerböden aufweist, an denen die motorischen Antriebe befestigbar sind und das eine Öffnung für den Lichtstrahl aufweist.

In der Zeichnung ist der Erfindungsgegenstand schematisch dargestellt und wird anhand der Figuren nachfolgend beschrieben, wobei gleich wirkende Bauteile mit denselben Bezugszeichen versehen sind. Dabei zeigt:
Fig. 1 ein erfindungsgemäßes konfokales Scanmikroskop,
Fig. 2 eine Vorrichtung zur Selektion und Detektion mindestens zweier Spektralbereiche eines Lichtstrahls und
Fig. 3 eine Vorrichtung zur Selektion und Detektion mindestens zweier Spektralbereiche eines Lichtstrahls in einer Schnittzeichnung.

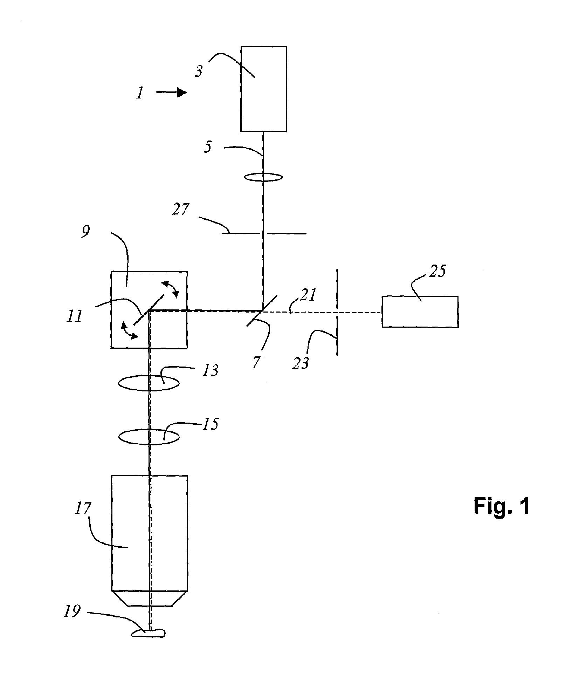

Fig. 1 zeigt schematisch ein erfindungsgemäßes konfokales Scanmikroskop. Das Scanmikroskop beinhaltet eine Lichtquelle 1, die als Laser 3 ausgeführt ist. Der von dem Laser 3 emittierte Beleuchtungslichtstrahl 5 wird nach dem Passieren einer Anregungsblende 27 von einem Hauptstrahlteiler 7 zu einer Strahlablenkeinrichtung 9, die einen kardanisch aufgehängten Scanspiegel 11 beinhaltet, reflektiert und von der Strahlablenkeinrichtung 9 durch die Scanoptik 13, die Tubusoptik 15 und das Objektiv 17 über bzw. durch die Probe 19 geführt. Der von der Probe 19 ausgehende Detektionslichtstrahl 21 gelangt auf demselben Lichtweg über die Strahlablenkeinrichtung 9 zurück zum Hauptstrahlteiler 7, passiert diesen und trifft nach Passieren der Detektionsblende 23 auf die Vorrichtung 25 zur Selektion und Detektion mindestens zweier Spektralbereiche. In der Zeichnung ist der Beleuchtungslichtstrahl 5 mit einer durchgezogenen Linie dargestellt, während das von der Probe 19 ausgehende Detektionslichtstrahl 21 gestrichelt dargestellt ist.

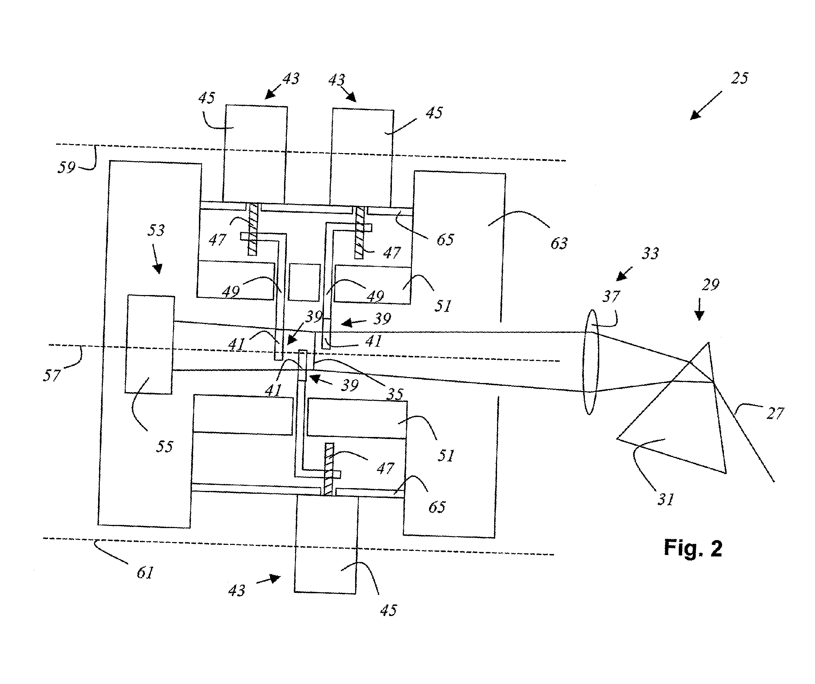

Fig. 2 zeigt eine Vorrichtung 25 zur Selektion und Detektion mindestens zweier Spektralbereiche eines Lichtstrahls 27 mit einem Mittel 29 zum spektralen Auffächern des Lichtstrahles, das als Prisma 31 ausgeführt ist. Die Vorrichtung beinhaltet ein Fokussiermittel 33 zum Fokussieren des spektral aufgespaltenen Lichtstrahles zu einer Fokuslinie 35, die als Linsensystem 37 ausgestaltet ist. Im Bereich der Fokuslinie 35 sind Mittel 39 zum Ausblenden eines ersten Spektralbereichs und zur Reflexion mindestens eines Teils des nicht ausgeblendeten Spektralbereichs angeordnet, die als Spiegelblenden 41 ausgeführt sind. Die Mittel 39 zum Ausblenden eines ersten Spektralbereichs und zur Reflexion mindestens eines Teils des nicht ausgeblendeten Spektralbereichs sind parallel zur Fokuslinie 35 verschiebbar. Zum Verschieben sind motorische Antriebe 43 vorgesehen, die als Elektromotoren 45 ausgeführt sind, und die Spiegelblenden 41 über einen Spindeltrieb 47 und über Antriebsstangen 49 bewegen. Die Antriebsstangen 49 sind gekröpft und in Führungsplatten 51 geführt. Die Vorrichtung beinhaltet außerdem eine Detektionseinrichtung 53 mit Detektoren 55 in einer zur Fokuslinie 35 senkrechten Ebene 57 angeordnet sind. Die motorischen Antriebe sind in Parallelebenen 59, 61 angeordnet. Die Detektoren 55 sind in einem ringförmigen Chassis 63, in dem Trägerböden 65 vorgesehen sind, an denen die motorischen Antriebe 43 befestigt sind.

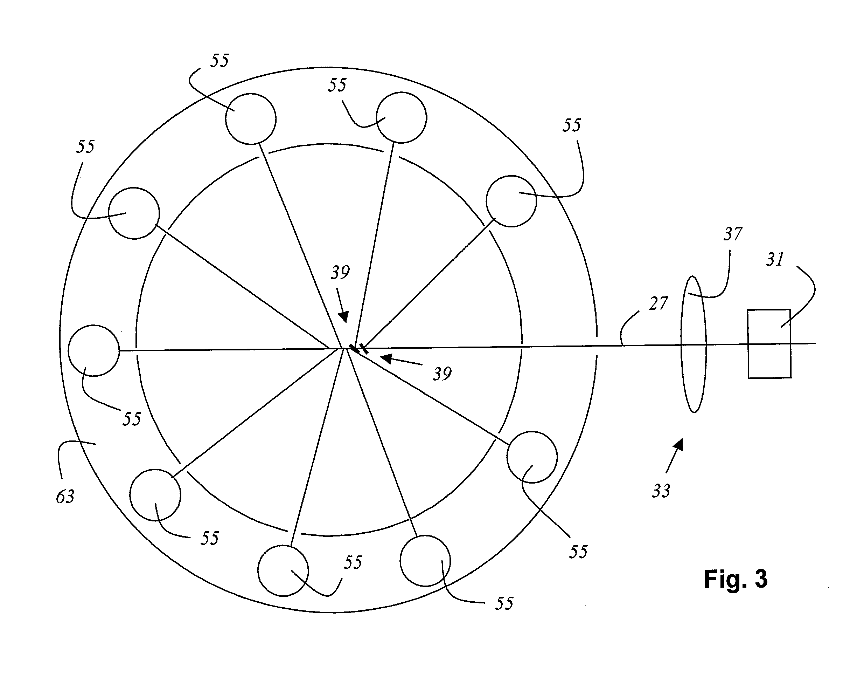

Fig. 3 zeigt eine Vorrichtung 25 zur Selektion und Detektion mindestens zweier Spektralbereiche eines Lichtstrahls 27 in einer Schnittzeichnung von oben durch die zur Fokuslinie 35 senkrechten Ebene 57 in der die Detektoren 55 angeordnet sind. Von den Mitteln 39 zum Ausblenden eines ersten Spektralbereichs und zur Reflexion mindestens eines Teils des nicht ausgeblendeten Spektralbereichs sind aus Gründen der Übersichtlichkeit lediglich zwei schematisch eingezeichnet. Ebenso sind die Mittel 29 zum spektralen Auffächern des Lichtstrahles und das Fokussiermittel 33 zum Fokussieren des spektral aufgespaltenen Lichtstrahles zu einer Fokuslinie 35 schematisch eingezeichnet.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Lichtquelle
- 3: Laser
- 5: Beleuchtungslichtstrahl
- 7: Hauptstrahlteiler
- 9: Spiegelblenden
- 11: Scanspiegel
- 13: Scanoptik
- 15: Tubusoptik
- 17: Objektiv
- 19: Probe
- 21: Detektionslichtstrahl
- 23: Detektionsblende
- 25: Vorrichtung
- 27: Anregungsblende
- 29: Mittel
- 31: Prisma
- 33: Fokussiermittel
- 35: Fokuslinie
- 37: Linsensystem
- 39: Mittel zum Ausblenden eines ersten Spektralbereichs und zur Reflexion mindestens eines Teils des nicht ausgeblendeten Spektralbereichs
- 41: Spiegelblenden
- 43: motorischer Antrieb
- 45: Elektromotor
- 47: Spindeltrieb
- 49: Antriebsstange
- 51: Führungsplatte
- 53: Detektionseinrichtung
- 55: Detektor
- 57: Ebene
- 61: Parallelebene
- 63: Chassis
- 65: Trägerboden

## Patentansprüche

1. Vorrichtung zur Selektion und Detektion mindestens zweier Spektralbereiche eines Lichtstrahls mit einem Mittel zum spektralen Auffächern des Lichtstrahles, mit in ihrer Position veränderbaren Mitteln zum Ausblenden eines ersten Spektralbereichs und zur Reflexion mindestens eines Teils des nicht ausgeblendeten Spektralbereichs und mit einer Detektionseinrichtung, die Mittel zur Detektion des ersten und Mittel zur Detektion des reflektierten Spektralbereichs umfasst, **dadurch gekennzeichnet, dass** Fokussiermittel zum Fokussieren des spektral aufgespaltenen Lichtstrahles zu einer Fokuslinie vorgesehen sind und dass die Detektionseinrichtung in einer zu der Geraden, auf der die Fokuslinie liegt, senkrechten Ebene angeordnet ist, wobei die Mittel zum Ausblenden eines ersten Spektralbereichs und zur Reflexion mindestens eines Teils des nicht ausgeblendeten Spektralbereichs parallel zu der Geraden, auf der die Fokuslinie liegt, in ihrer Position veränderbar sind.

2. Vorrichtung nach Anspruch 1, **dadurch gekennzeichnet, dass** die Detektionseinrichtung ringförmig um die Mittel zum Ausblenden eines ersten Spektralbereichs und zur Reflexion mindestens eines Teils des nicht ausgeblendeten Spektralbereichs angeordnet ist.

3. Vorrichtung nach einem der Ansprüche 1 oder 2, **dadurch gekennzeichnet, dass** die Mittel zum Ausblenden eines ersten Spektralbereichs und zur Reflexion mindestens eines Teils des nicht ausgeblendeten Spektralbereichs drehbar gelagert sind.

4. Vorrichtung nach einem der Ansprüche 1 bis 3, **dadurch gekennzeichnet, dass** zumindest ein motorischer Antrieb vorgesehen ist mit dem die Mittel zum Ausblenden eines ersten Spektralbereichs und zur Reflexion mindestens eines Teils des nicht ausgeblendeten Spektralbereichs in ihrer Position veränderbar sind.

5. Vorrichtung nach Anspruch 4, **dadurch gekennzeichnet, dass** der motorische Antrieb in einer Ebene Angeordnet ist, die parallel zu der zur Fokuslinie senkrechten Ebene liegt.

6. Vorrichtung nach einem der Ansprüche 4 und 5, **dadurch gekennzeichnet, dass** der zumindest eine motorische Antrieb die Mittel zum Ausblenden eines ersten Spektralbereichs und zur Reflexion mindestens eines Teils des nicht ausgeblendeten Spektralbereichs über Antriebsstangen oder Antriebsrohre verschiebt.

7. Vorrichtung nach Anspruch 6, **dadurch gekennzeichnet, dass** die Antriebsstangen oder Antriebsrohre die gekröpft sind.

8. Vorrichtung nach einem der Ansprüche 6 oder 7, **dadurch gekennzeichnet, dass** die Mittel zum Ausblenden eines ersten Spektralbereichs und zur Reflexion mindestens eines Teils des nicht ausgeblendeten Spektralbereichs als verspiegelte Halbzylinder ausgebildet sind, die in die Antriebsrohre einfügbar sind.

9. Vorrichtung nach einem der Ansprüche 1 bis 8, **dadurch gekennzeichnet, dass** die Mittel zum Ausblenden eines ersten Spektralbereichs und zur Reflexion mindestens eines Teils des nicht ausgeblendeten Spektralbereichs Spiegelblenden sind.

10. Vorrichtung nach einem der Ansprüche 1 bis 9, **dadurch gekennzeichnet, dass** die Mittel zur Detektion in einem ringförmig ausgebildeten Chassis angeordnet sind.

11. Vorrichtung nach Anspruch 10, **dadurch gekennzeichnet, dass** die Mittel zur Detektion parallel zur Fokuslinie in das ringförmige Chassis einbringbar sind.

12. Vorrichtung nach einem der Ansprüche 10 oder 11, **dadurch gekennzeichnet, dass** in dem ringförmigen Chassis Trägerböden vorgesehen sind, an denen die motorischen Antriebe befestigbar sind.

13. Scanmikroskop, insbesondere konfokales Scanmikroskop, mit einer Vorrichtung nach einem der Ansprüche 1 bis 12.
